# EUROPÄISCHE PATENTSCHRIFT

(11) **EP 0 861 989 B1**
(45) Veröffentlichungstag und Bekanntmachung des Hinweises auf die Patenterteilung: **23.08.2000**
(21) Anmeldenummer: 98102884.8
(22) Anmeldetag: 18.02.1998
(51) Int. Cl.: F16C 13/00

(54) **Elastische Kupplung zwischen einem Zylinder und einer Lager- oder Antriebseinheit, die achsrecht ausgerichtet sind**
Flexible coupling between a cylinder and an axially aligned bearing or drive unit
Couplage élastique entre un cylindre et un dispositif de palier ou d'entraînement aligné dans l'axe

(30) Priorität: 19.02.1997 DE 19706344
(43) Veröffentlichungstag der Anmeldung: 02.09.1998
(73) Patentinhaber: FLEISSNER GmbH & Co. KG Maschinenfabrik, D-63329 Egelsbach (DE)
(72) Erfinder: Fleissner, Gerold, 6300 Zug (CH)
(74) Vertreter: Neumann, Gerd, Dipl.-Ing.

(56) Entgegenhaltungen:
- EP-A- 0 442 257
- DE-A- 1 501 622
- GB-A- 531 924

## Beschreibung

Die Erfindung bezieht sich auf eine Kupplung wie sie im Oberbegriff des 1. Anspruchs definiert ist.

Eine Kupplung gemäß der Gattung ist aus der GB-A-531 924 bekannt. Dort umgeben die beiden zu verbindenden Enden zweier Antriebsachsen zylinderförmige von den Achsen achsrecht durchstoßene Hauben, deren aufeinander zu gerichtete Enden am Umfang ein Schraubgewinde aufweisen, mit dem sie miteinander verschraubbar sind. Wenigstens eine Haube umfaßt einen elastischen den entsprechenden Zylinder umgebenden Ring, der einerseits durch das teils geschlossene Ende der Haube und andererseits durch ein achsrechtes Distanzstück begrenzt ist, das die Enden der Zylinder umfaßt und sie auf Distanz hält. Durch Verschrauben der beiden Hauben miteinander wird der wenigstens eine elastische Ring gegen die Oberfläche des entsprechenden Zylinders gepreßt, womit die Kupplung hergestellt ist.

Eine Kupplung dieser Art fixiert den einen Zylinder nur, wenn er mit dem anderen über die miteinander verschraubten Hauben verbunden ist. Bei einer Demontage der Kupplungsfixierung ist der Zylinder nicht mehr gehalten.

Solche Probleme entstehen z. B. bei der Verbindung von zwei Hohlzylindern. Ein Hohlzylinder ist an seinem Außenumfang zu befestigen, wenn der Raum innerhalb des Hohlzylinders zu irgendwelchen Verfahrensvorgängen ungehindert genutzt werden soll. Dies ist z. B. gemäß der EP-A-0 188 454 der Fall, wenn an der Stirnseite eines solchen Hohlzylinders Fasern oder Pulp eingefüllt werden, um diese dann von innen nach außen durch die Perforation des dünnwandigen Hohlzylinders herauszuwirbeln und insbesondere herauszusaugen. Die Bewegung der Fasern von innerhalb des Hohlzylinders nach außen zur Herstellung eines Vlieses aus diesen Fasern wird durch eine im Bereich des Innenumfangs des Hohlzylinders achsparallel angeordnete und sich schnell drehende Nadelwalze unterstützt.

Der Hohlzylinder, hier der durchlässige und damit flexible Hohlzylinder muß zu seiner Drehung um seine Längsachse an den Stirnseiten drehbar gelagert sein. Es ist in der Praxis bekannt, den Hohlzylinder an den beiden Stirnseiten an je einen Lagerring von innen nach außen zu schrauben und dann den Lagerring außen auf mehreren paarweise gegeneinander gerichteten Rädern oder Rollen, die in am Außenumfang des Lagerrings eingebrachte Winkelnuten eingreifen, zu lagern und anzutreiben. Diese Lagerung hält zwar die Stirnseiten der Hohlzylinder offen, sie ist aber zu labil, der Hohlzylinder läuft zumindest auf Dauer nicht rund und es besteht die Gefahr des Abreißens des Hohlzylinders von dem Lagerring, weil insbesondere innerhalb des Hohlzylinders beim Vlieslegen heftige Dreh- und Schlagbewegungen erzeugt werden. Bei einer Zerstörung des Hohlzylinders ist aber ein Austausch des defekten Hohlzylinders mit großem Aufwand verbunden, weil auch die Lagerung demontiert werden muß.

Der Erfindung liegt die Aufgabe zugrunde, eine stirnseitige Verbindung eines Hohlzylinders mit einer Lager- oder Antriebseinheit zu finden, die eine einfache, schnell demontierbare, elastische Rundumbefestigung des an sich labilen Hohlzylinders an der Einheit bewirkt.

Zur Lösung der gestellten Aufgabe ist nach der Erfindung vorgesehen, daß zunächst der zylindrische Körper als Hohlzylinder ausgebildet, und die Klemmvorrichtung als den Ring selbständig pressende nur den Hohlzylinder umgebende Klemmscheibe vorgesehen ist, die mit der Stirnseite der Lager- oder Antriebseinheit mit einzelnen am Umfang der Klemmscheibe verteilten Schrauben fest verschraubt ist. Der Hohlzylinder ist damit nicht mehr starr über einzelne radial ausgerichtete Schrauben mit seinem Lagerring, sondern unabhängig von der Innenumfangsfläche und zusätzlich elastisch und rundum gleichbleibend drehfest befestigt. Die Verbindung ist somit kraft-, aber nicht formschlüssig. Diese Verbindung ist nicht nur einfach herstellbar, sondern die Montage ist schnell durchführbar und der Hohlzylinder ist schnell auswechselbar, und zwar auch, weil der an sich labile Zylinder durch die in sich stabile Klemmscheibe rundum fixiert ist. Außerdem trägt die ganze Befestigung an den Lagern und auch die Ausbildung der Lager radial nicht auf, was vorteilhaft ist, wenn zwei derartiger Hohlzylinder dicht nebeneinander angeordnet sind, um das die Zylinder durchlaufende Material verlustfrei befördern zu können.

Mit Vorteil besteht die Klemmscheibe aus einer Zwillingsklemmscheibe, die unabhängig von der Verbindung mit der Lager- oder Antriebseinheit den Hohlzylinder über die Klemmscheibe fixiert. Werden jetzt die beiden Klemmscheiben miteinander verschraubt, so drücken sie den Ring in der radial nach innen offenen Ringnut der Klemmscheibe gleichmäßig über den Umfang gegen den Hohlzylinder, fixieren ihn in seinem Umfang und halten ihn zur leichteren Demontage manipulierbar. Ein defekter Hohlzylinder ist, befreit von der Kupplung, lediglich radial herauszuheben, auszutauschen, und zur Montage sind die beiden Klemmscheiben dann ihrerseits nur noch mit der Lager- oder Antriebseinheit zu verschrauben.

Die Lager- oder Antriebseinheit sollte aus einem vorzugsweise mit dem Hohlzylinder im Innendurchmesser fluchtenden zylindrischen Flanschring bestehen, der über ein außen den Flanschring umfassendes Lager mit einem den Hohlzylinder tragenden Gehäuse verbunden ist. Auf den Flanschring kann direkt ein Zahnrad aufgeschrumpft sein, in das zum Drehantrieb des Hohlzylinders vom Gehäuse aus ein angetriebenes Gegenzahnrad eingreift.

Eine Vorrichtung der erfindungsgemäßen Art ist in der Zeichnung beispielhaft dargestellt. Es zeigen:
- Fig. 1: im Querschnitt die eine Stirnseite eines Hohlzylinders, der über eine elastische Verbindung mit einem Lagerring verbunden ist, und
- Fig. 2: ebenfalls im Querschnitt die andere Stirnseite des Hohlzylinders mit einer Antriebseinheit als Lagerring.

Der Hohlzylinder ist mit 1 bezeichnet. Er kann eine größere Länge aufweisen und insbesondere durchlässig perforiert sein. Er ist nicht formschlüssig, sondern elastisch gelagert, was sich bei seiner betriebsbedingten Drehung um seine Längsachse auswirkt. Innerhalb des Hohlzylinders ist im Bereich seines Innenumfangs achsparallel eine Bürstenwalze drehbar gelagert, die für die Verwirbelung der stirnseitig eingebrachten Fasern sorgt, hier jedoch nicht dargestellt ist.

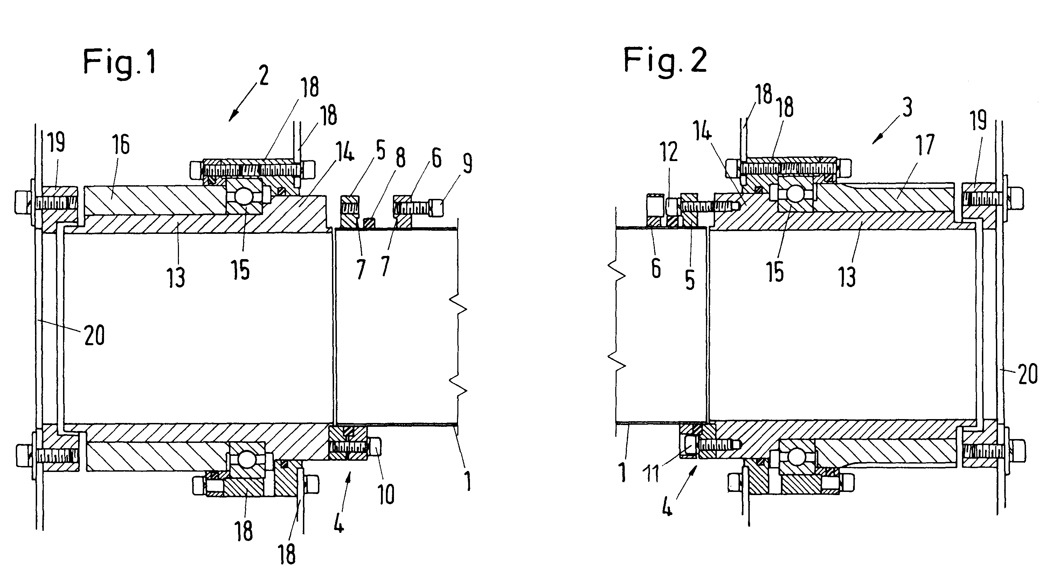

Dieser Hohlzylinder 1 ist stirnseitig zu lagern und zur Drehung um seine Längsachse anzutreiben. Zur Verbindung mit dem Lagerring 2 gemäß Fig. 1 oder mit dem Antriebsring 3 gemäß Fig. 2 ist jeweils an der Stirnseite des Hohlzylinders 1 eine Zwillingsklemmscheibe 4 mit den beiden Klemmscheiben 5 und 6 vorgesehen, die den Hohlzylinder 1 mit nur einem geringfügig größeren Durchmesser umgeben. Zwischen sich, je zur Hälfte, schließen die beiden Klemmscheiben 5, 6 eine radial nach innen offene Ringnut 7 ein, in die ein auf den Außenumfang des Hohlzylinders 1 geschobener elastischer Ring 8 paßt. Der lichte Durchmesser der Ringnut 7 sollte im verschraubten Zustand der Zwillingsklemmscheibe 4 kleiner als der des Rings 8 sein. Werden jetzt die beiden Klemmscheiben 5 und 6 durch die Schrauben 9 und 10 gemäß Fig. 1, die gleichmäßig über den Umfang der Zwillingsklemmscheibe 4 angeordnet sind, miteinander verschraubt, so pressen sie - wie bei der Schraube 10 dargestellt - den Ring 8 gegen den Außenumfang des Hohlzylinders 1 und halten diesen in Umfangsrichtung fest. Ist nun - wie in Fig. 2 dargestellt - diese Zwillingsklemmscheibe 4 durch Schrauben 11, 12, die ebenfalls gleichmäßig über den Umfang der Zwillingsklemmscheibe 4 angeordnet sind, mit dem Lager- 2 und dem Antriebsring 3 verschraubt, so ist die vorteilhaft elastisch feste Verbindung des Hohlzylinders mit den Lagerringen 2, 3 hergestellt.

Sowohl der Lager- wie auch der Antriebsring 2, 3 sind im Innendurchmesser gleich groß wie der Hohlzylinder 1 hergestellt. Sie bestehen jeweils aus einem breiteren Flanschring 13, an dessen radial außen vorgesehenen Flansch 14 einerseits die Zwillingsklemmscheibe 4 angeschraubt ist und andererseits ein Kugellager 15 anliegt. Das Kugellager 15 ist auf der einen Stirnseite des Hohlzylinders 1 gemäß Fig. 1 über einen aufgeschrumpften Befestigungsring 16 und auf der anderen Stirnseite des Hohlzylinders 1 gemäß Fig. 2 über ein aufgeschrumpftes Zahnrad 17 seitlich gehalten. Radial außerhalb ist das Kugellager 15 mit dem ortsfesten, also nicht drehenden Gehäuse 18 verbunden. An den beiden offenen Stirnseiten der Flanschringe 13 ist jeweils ein Labyrinthdichtungsring 19 angeordnet, der wiederum mit einer Wandung 20 des Gehäuses 18 verschraubt ist.

An dem stillstehenden Gehäuse 18 - 20 ist also über die Kugellager 15 der Hohlzylinder 1 über die Lager- bzw. Antriebsringe 2, 3 drehbar gelagert. Der Antriebsring 3 ist mittels eines nicht dargestellten Zahnradritzels, das mit dem Zahnrad 17 kämmt, um seine Längsachse angetrieben. Die beiden Stirnseiten des Hohlzylinders 1 und auch die der Lagerringe 2, 3 sind für den Ein- und Austritt von Materialien offen. Der Ein- und Austritt der Materialien erfolgt über nicht dargestellte Öffnungen in der Gehäusewandung 20.

## Patentansprüche

1. Kupplung zwischen einem drehbar gelagerten Zylinder (1) und einer Lager- oder Antriebseinheit (2,3,13), die achsrecht ausgerichtet sind und deren zugeordnete Enden elastisch miteinander verbunden sind, wozu eine eine zum Außenumfang des Zylinders (1) hin offene, einen elastischen Ring (8) umfassende Ringnut aufweisende Klemmvorrichtung vorgesehen ist, die den Ring gegen die Außenfläche des Zylinders presst und die ihrerseits zur Herstellung der Kupplung mit der Lager- oder Antriebseinheit drehfest verbunden ist, dadurch gekennzeichnet, daß der Zylinder als Hohlzylinder (1) ausgebildet, und die Klemmvorrichtung als den Ring (8) selbständig pressende nur den Hohlzylinder (1) umgebende Klemmscheibe (4) vorgesehen ist, die mit der Stirnseite der Lager- oder Antriebseinheit (2,3,13) mit einzelnen am Umfang der Klemmscheibe (4) verteilten Schrauben (11, 12) fest verschraubt ist.

2. Kupplung nach Anspruch 1, dadurch gekennzeichnet, daß die Klemmscheibe (4) aus einer Zwillingsklemmscheibe (5, 6) besteht, die unabhängig von der Verbindung mit der Lager- oder Antriebseinheit (13) den Hohlzylinder (1) über die Klemmscheibe (5, 6) fixiert.

3. Kupplung nach Anspruch 2, dadurch gekennzeichnet, daß die beiden Klemmscheiben (5, 6) miteinander und ihrerseits mit der Lager- oder Antriebseinheit (13) durch am Umfang des Hohlzylinders (1) verteilte Schrauben (9, 10; 11, 12) verbindbar sind.

4. Kupplung nach einem der Ansprüche 1 - 3, mit der die Lager- oder Antriebseinheit verbunden ist, dadurch gekennzeichnet, daß die Lager- oder Antriebseinheit (13) aus einem vorzugsweise mit dem Hohlzylinder (1) im Innendurchmesser fluchtenden zylindrischen Flanschring (13) besteht, der über ein außen den Flanschring (13) umfassendes Lager (15) mit einem den Hohlzylinder (1) tragenden Gehäuse (18 - 20) verbunden ist.

5. Kupplung nach Anspruch 4, mit der die Lager- oder Antriebseinheit verbunden ist, dadurch gekennzeichnet, daß um den Flanschring (13) ein Zahnrad (17) befestigt ist, in das zum Antrieb des Hohlzylinders (1) das Antriebsritzel eines Motors eingreift.

## Claims

1. Coupling between a rotatably mounted cylinder (1) and a bearing or driving unit (2, 3, 13), which components are axially orientated, and the associated ends of which are resiliently interconnected, for which purpose a clamping device is provided, which has an annular groove which is open towards the external periphery of the cylinder (1) and includes a resilient ring (8), said clamping device pressing the ring against the external face of the cylinder and, for its part, being non-rotatably connected to the bearing or driving unit to establish the coupling, characterised in that the cylinder is configured as hollow cylinder (1), and the clamping device is provided as clamping disc (4), which presses the ring (8) independently and surrounds only the hollow cylinder (1), said clamping disc being securedly screw-connected to the end face of the bearing or driving unit (2, 3, 13) by-means of individual screws (11, 12), which are distributed around .the periphery of the clamping disc (4).

2. Coupling according to claim 1, characterised in that the clamping disc (4) comprises a double clamping disc (5, 6), which secures the hollow cylinder (1) via the clamping disc (5, 6) independently of the connection with the bearing or. driving unit (13).

3. Coupling according to claim 2, characterised in that the two clamping discs (5, 6) are interconnectable and, for their part, are connectable to the bearing or driving unit (13) by means of screws (9, 10; 11, 12) which are distributed around the periphery of the hollow cylinder (1).

4. Coupling according to one of claims 1 - 3, to which the bearing or driving unit is connected, characterised in that the bearing or driving unit (13) comprises a cylindrical flanged ring (13), which is preferably in alignment with the hollow cylinder (1) in respect of its internal diameter and is connected to a housing (18 - 20), which carries the hollow cylinder (1), via a bearing (15), which includes the flanged ring (13) externally.

5. Coupling according to claim 4, to which the bearing or driving unit is connected, characterised in that a toothed wheel (17) is mounted around the flanged ring (13), the driving pinion of a motor engaging in said toothed wheel to drive the hollow cylinder (1).

## Revendications

1. Accouplement entre un cylindre tournant (1) et une unité d'entraînement ou de support (2, 3, 13) orientés de manière axiale et dont les extrémités alignées sont reliées de manière flexible l'une à l'autre à l'aide d'un dispositif de serrage ouvert vers le pourtour extérieur du cylindre (1) et pourvu d'une rainure pour anneau de retenue comprenant une rondelle élastique (8), laquelle rainure presse la rondelle contre la surface extérieure du cylindre et est reliée de manière fixe à l'unité d'entraînement ou d'appui afin de permettre l'accouplement caractérisé en ce que le cylindre se présente sous la forme d'un cylindre creux (1) et un anneau de serrage (4) pressant le dispositif de serrage et la rondelle (8) et entourant seulement le cylindre creux (1) est solidement fixé à la face frontale de l'unité d'appui ou d'entraînement (2, 3, 13) à l'aide de boulons (11, 12) répartis sur le pourtour de l'anneau de serrage (4).

2. Accouplement selon la revendication 1, caractérisé en ce que l'anneau de serrage (4) est composé de deux anneaux de serrage (5, 6) identiques, qui fixent le cylindre creux (1) par ces anneaux de serrage (5, 6), indépendemment de la liaison à l'unité d'appui ou d'entraînement (13).

3. Accouplement selon la revendication 2, caractérisé en ce que les deux anneaux de serrage (5, 6) sont reliables l'un à l'autre et à l'unité d'appui ou d'entraînement (13) par l'intermédiaire de boulons (9, 10; 11, 12) répartis sur le pourtour du cylindre creux (1).

4. Accouplement selon l'une ou l'autre des revendications 1 à 3, auquel est reliée l'unité d'appui ou d'entraînement, et caractérisé en ce que l'unité d'appui ou d'entraînement (13) se compose d'un anneau cylindrique aligné de préférence avec le cylindre creux (1), dans le diamètre intérieur, et relié à un des boîtiers (18 - 20) portant le cylindre creux (1) par l'intermédiaire d'un support (15) entourant l'anneau (13).

5. Accouplement selon la revendication 4 auquel est reliée l'unité d'appui ou d'entraînement, et caractérisé en ce que une roue dentée (17) dans laquelle le pignon moteur s'enclenche en vue de l'activation du cylindre creux (1) est fixée autour de l'anneau (13).
